Europäisches Patentamt

European Patent Office

Office européen des brevets

(11) Numéro de publication: **0 250 279**
A2

## (12) DEMANDE DE BREVET EUROPEEN

(21) Numéro de dépôt: 87401104.2

(22) Date de dépôt: 15.05.87

(51) Int. Cl.⁴: **E 21 B 47/10,** E 21 B 49/00, G 01 N 15/08

(30) Priorité: **15.05.86 FR 8606992**

(43) Date de publication de la demande: **23.12.87**
**Bulletin 87/52**

(84) Etats contractants désignés: **AT BE DE ES FR GB IT**

(71) Demandeur: **SOLETANCHE Société Anonyme dite:, 6 rue de Watford, F-92005 Nanterre (FR)**

(72) Inventeur: **Evers, Gérard, 12 rue du Chêne, F-78121 Crespières (FR)**
Inventeur: **Hamelin, Jean-Pierre, 22 rue Escudier, F-92100 Boulogne (FR)**

(74) Mandataire: **Nony, Michel et al, Cabinet NONY & CIE 29, rue Cambacérès, F-75008 Paris (FR)**

(54) **Procédé et dispositif pour la mesure de la perméabilité d'un terrain.**

(57) Dispositif pour la mesure de la perméabilité d'un terrain, caractérisé par le fait qu'il comprend un appareil de forage comportant un train de tiges (2) supportant à son extrémité un outil de forage (57, pour réaliser un forage délimitant un espace annulaire (7) entre le train de tiges et la paroi du forage, un système de contrôle de débit ou de pression, un conduit (14) permettant de mettre en communication l'espace annulaire et ledit système, des moyens (24) pour mesurer au moins la pression ou le débit en tête du forage, et un calculateur électronique (26) agencé pour recevoir en entrée les signaux issus desdits moyens de mesure et pour en déduire la perméabilité du terrain.

Procédé et dispositif pour la mesure de la perméabilité d'un terrain

La présente invention concerne un procédé et un dispositif pour la mesure de la perméabilité d'un terrain.

On rappellera tout d'abord que la perméabilité d'un terrain est définie à partir de la loi de Darcy, comme le rapport au gradient de pression, du débit traversant une tranche de ce terrain, de surface et d'épaisseur unité.

La connaissance de la perméabilité d'un terrain est essentielle pour la réalisation de nombreux ouvrages de génie civil, et notamment à chaque fois que l'on souhaite imperméabiliser ce terrain à l'aide d'injections.

Ceci est le cas par exemple lorsque l'on souhaite réaliser un voile étanche sous l'assise d'un barrage,

On rencontre également ce problème lors du creusement à sec de tunnels. Dans ce dernier cas, on procède souvent à des injections en avant du front de taille pour étanchéifier la paroi de ce dernier.

Jusqu'à présent, pour connaitre la perméabilité d'une tranche de terrain située à une distance comprise entre L et L + 1 de la surface, on procède à un forage jusqu'à la distance L + 1, on retire partiellement ou complètement le train de tiges, on équipe le forage avec des tiges d'injection d'eau munies d'un obturateur que l'on positionne à la distance L, on injecte de l'eau sous une pression donnée en mesurant le débit correspondant, on extrait l'équipement d'essai, on remet en place le train de tiges de forage, et on procède au forage de la passe suivante.

Une telle procédure ne peut pas être automatisée et exige beaucoup de temps pendant lequel l'outil de production, par exemple le tunnelier, est à l'arrêt. De ce fait, on limite souvent le nombre des essais à un strict minimun, ce qui conduit à une connaissance imparfaite de la perméabilité avec les risques ou inconvénients que cela comporte.

La présente invention vise à pallier ces inconvénients en fournissant un procédé et un dispositif pour la mesure de la perméabilité d'un terrain qui donnent des résultats en temps réel, qui soient faciles à mettre en oeuvre,

TG/JD/AO

qui ne nécessitent pas l'extraction du train de tiges à chaque passe, et qui puissent être automatisés dans une large mesure.

A cet effet, selon un premier aspect de l'invention, celle-ci a pour objet un procédé pour la mesure de la perméabilité d'un terrain homogène, caractérisé par le fait que l'on effectue un forage dans ledit terrain, que l'on relie la tête du forage à un système d'acquisition de données et de contrôle du débit ou de la pression, que l'on provoque dans ledit forage un écoulement de liquide à partir dudit système, que l'on relève en tête du forage, à l'aide dudit système, la variation du débit en fonction de la pression, et que l'on déduit de la courbe ainsi obtenue la perméabilité du terrain.

Selon un autre aspect de l'invention, celle-ci a pour objet un procédé pour la mesure de la perméabilité d'une tranche homogène d'un terrain, caractérisé par le fait que, dans une première étape, on effectue un forage dans ledit terrain jusqu'au début de ladite tranche homogène, et on provoque dans ledit forage un écoulement de liquide en relevant, en tête du forage, la variation du débit en fonction de la pression, que, dans une deuxième étape, on poursuit ledit forage jusqu'à la fin de ladite tranche homogène, et on provoque un nouvel écoulement de liquide dans le forage en relevant de nouveau, en tête du forage, la variation du débit en fonction de la pression, et que l'on déduit des deux courbes ainsi obtenues la perméabilité de ladite tranche de terrain.

De préférence, dans ce cas également, après avoir effectué ledit forage jusqu'au début de la tranche homogène, et après avoir poursuivi ledit forage jusqu'à la fin de la tranche homogène, on relie la tête du forage à un système d'acquisition de données et de contrôle de la pression ou du débit, et on provoque les écoulements de liquide à partir dudit système.

On verra ci-après que la courbe du débit $Q_S$ en tête du forage en fonction de la pression $P_S$ en tête de forage caractérise la perméabilité du terrain traversé par le forage.

Le débit $Q_S$ peut être mesuré par tout moyen convenable tel qu'un débimètre placé en tête du forage, mais on peut aussi le déduire de la variation en fonction du temps, de la pression dans un réservoir pressurisé relié à la tête du forage.

On entend ici par réservoir pressurisé, un réservoir étanche muni d'une arrivée de liquide et rempli partiellement de liquide et partiellement d'un fluide gazeux sous pression. Par ailleurs, lorsqu'il est question d'un écoulement de liquide "à partir" de ce réservoir, ceci peut aussi bien correspondre à une arrivée de liquide dans le réservoir, ce qui est le cas d'un pompage avec un débit positif, qu'une sortie du liquide vers le forage, ce qui est le cas de l'injection avec un débit négatif.

On comprend que, suivant la pression qui règne dans le réservoir, l'écoulement s'effectuera dans un sens ou dans l'autre de manière à tendre à équilibrer la pression dans le réservoir et dans le forage.

Par conséquent, dans le cas de l'utilisation d'un tel réservoir, on conçoit que, connaissant la quantité de gaz contenue dans le réservoir et sa pression, il est facile d'en déduire son volume et ainsi, le volume du liquide contenu dans ce même réservoir. Le débit volumique du liquide dans le réservoir n'est autre que la variation en fonction du temps de ce volume, sous réserve de l'hypothèse de l'incompressibilité du liquide qui peut, bien entendu, être admise dans le cas présent.

On peut donc ainsi mesurer la perméabilité du terrain en relevant uniquement la pression dans le réservoir pressurisé en fonction du temps.

Dans tous les cas, l'écoulement du liquide dans le forage s'effectue dans un sens ou dans l'autre en fonction de la pression en tête du forage. Il est donc possible de choisir ce sens d'écoulement, en particulier en fonction de la pression d'eau dans le terrain. Toutefois, les essais s'effectueront de préférence en pompage, de manière à éviter le colmatage de la paroi du forage qui se produit généralement en injection, et qui conduit à sous-estimer la perméabilité du terrain.

Dans le cas du pompage, c'est-à-dire lorsque l'on provoque l'écoulement du liquide du fond du forage vers la tête du forage, on peut avantageusement représenter la variation du débit en fonction de la pression en traçant

TG/JD/AD

la droite obtenue en portant les couples $(Q_S, P_S)$ dans le plan

$(W_S, \text{Arctg} \dfrac{Q_S}{SW_S})$ avec:

$$W_S = \sqrt{2 \frac{P_o - P_S}{d_w} - V_S^2} \quad \text{et}$$

$$Q_S = s\, V_S$$

$P_o$ étant la pression de la nappe d'eau au niveau où est effectuée la mesure, $d_w$ étant la densité de l'eau, s étant la section libre en tête du forage, et S la section libre du forage.

Lorsqu'au contraire on provoque l'écoulement du liquide de la tête du forage vers le fond du forage, on représente avantageusement la variation du débit en fonction de la pression en traçant la droite obtenue en portant les couples

$(Q_S, P_S)$ dans le plan $(W_S, \text{Argth} \dfrac{|Q_S|}{SW_S})$ avec:

$$W_S = \sqrt{2 \frac{P_S - P_o}{d_w} + V_S^2} \quad \text{et}$$

$$Q_S = s\, V_S$$

En toute rigueur, la courbe ainsi obtenue n'est une droite que sous les hypothèses suivantes, généralement admises en matière d'interprétation d'essais d'eau :
- L'eau est supposée incompressible et de densité $d_w$.
- L'écoulement autour du forage entraîne uniquement un drainage radial, c'est-à-dire perpendiculaire à l'axe du forage, et vérifie la loi de Darcy. On remarquera que le fait de supposer le drainage radial revient à négliger les cheminements d'eau qui ont lieu à partir du fond du forage, ce qui conduit, dans le cas d'un pompage, à sous-estimer très légèrement le débit.
- Les rayons d'actions R du drainage sont suffisamment faibles par rapport à la profondeur à laquelle est effectuée la mesure pour que la pression de l'eau à la distance R du forage soit indépendante de la direction dans laquelle on la mesure.

- Les lignes de courant dans le forage sont toutes parallèles à l'axe du forage et la vitesse de l'écoulement dans chaque section est uniforme et égale à $V_z$. La pression correspondante $P_z$ est également uniforme dans toute la section du forage. Cette hypothèse conduit toujours dans le cas du pompage, à surestimer les débits. En particulier, l'aspect laminaire de l'écoulement dans le forage est négligé, le liquide étant supposé non visqueux.

- L'écoulement dans le terrain et dans le forage est supposé quasi permanent. Autrement dit, aucune des grandeurs physiques concernées ne dépend du temps.

De toutes manières, un calibrage des appareils utilisés permet de corriger les résultats obtenus lorsque les hypothèses ci-dessus ne sont pas admissibles.

De même, ce qui précède suppose un écoulement dans le forage sans perte de charge. Un étalonnage est en outre également nécessaire dans le cas d'un forage incliné ou vertical.

Dans le cas où l'on mesure la perméabilité d'une tranche de terrain comprise entre deux plans au fond d'un forage, ce qui conduit, comme cela a été vu précédemment, à tracer deux droites avec les hypothèses ci-dessus, on "soustrait" la droite obtenue lors de la première étape de la droite obtenue lors de la deuxième étape, c'est-à-dire que l'on construit la droite dont chaque point a une ordonnée égale à la différence des ordonnées correspondantes des deux premières droites.

Dans tous les cas, on mesure la pente de la droite obtenue et on déduit la perméabilité du terrain de ladite pente, dans le cas le plus simple en multipliant cette pente par une constante.

Si l'on néglige la viscosité du liquide, cette constante est, sous réserve d'étalonnage, égale à :

$$\frac{S \ln (R/r_o)}{\pi} \cdot \frac{g}{1}$$

où R est le rayon d'action de l'écoulement dans le terrain, $r_o$ est le rayon du forage, g est l'attraction de la pesanteur, et 1 est l'épaisseur de la tranche de terrain dans laquelle on mesure la perméabilité.

TG/JD/AO

En fait, ce qui précède peut s'écrire :

$$\omega\, 1 = p$$

où   p est la pente de la droite, et

$$\omega = \frac{\pi}{S\, \ln(R/r_o)}\, \frac{k}{g}$$

k étant la perméabilité cherchée.

Dans le cas où la viscosité du liquide ne pourra être négligée, on procèdera de façon similaire en remplaçant   par :

$$\omega_v = \frac{1}{2\nu + \frac{S}{\pi}\, \ln\, (R/r_o)\frac{g}{k}}$$

où $\nu$ est la viscosité cinématique du fluide.

La présente invention a également pour objet un dispositif pour la mesure de la perméabilité d'un terrain, caractérisé par le fait qu'il comprend un appareil de forage comportant un train de tiges supportant à son extrémité un outil de forage pour réaliser un forage délimitant un espace annulaire entre le train de tiges et la paroi du forage, un système de contrôle de débit ou de pression, un conduit permettant de mettre en communication l'espace annulaire et ledit système, des moyens pour mesurer au moins la pression ou le débit en tête du forage et un calculateur électronique agencé pour recevoir en entrée les signaux issus desdits moyens de mesure et pour en déduire la perméabilité du terrain.

Le procédé décrit ci-dessus peut donc être mis en oeuvre avec ce dispositif sans qu'il soit nécessaire de retirer le train de tiges, l'écoulement de liquide s'effectuant vers la tête du forage dans l'espace annulaire formé entre le train de tiges et la paroi du forage. On peut donc procéder. pas à pas, et effectuer par exemple une mesure lors de chaque ajout de tige au train de tiges, et donc sans aucune perte de temps.

Le dispositif peut en outre comprendre un avant-tube d'ancrage scellé au terrain et concentrique audit train de tiges, pour reprendre la poussée hydrostatique du liquide.

Un presse-étoupe gonflable peut être prévu entre le train de tiges et l'avant-tube d'ancrage, ce presse-étoupe étant dégonflé pendant le forage et gonflé pendant les mesures.

Un clapet anti-retour est de préférence prévu à l'extrémité du train de tiges, de manière à pouvoir injecter un liquide de forage par l'intérieur du train de tiges pendant le forage.

Ledit système de contrôle peut comprendre, dans un premier mode de réalisation un réservoir pressurisé pouvant comporter une vanne de mise à l'air libre et une vanne de vidange, cette dernière étant de préférence à niveau réglable.

Dans un second mode de réalisation, le système de contrôle comprend une vanne asservie sur la pression ou le débit mesuré en tête de forage.

Il est alors possible d'asservir la vanne soit de façon à simuler le premier mode de réalisation, soit de façon à obtenir toute variation souhaitée du débit ou de la pression. On peut alors être amené à ajouter au système une pompe d'injection éventuellement régulée.

Le dispositif peut en outre également comprendre un ensemble de mesure des paramètres de forage permettant de déterminer automatiquement les tranches homogènes de terrain pour chacune desquelles un essai de perméabilité doit être réalisé.

On décrira maintenant un mode de réalisation particulier de l'invention en référence aux dessins annexés dans lesquels :
- la figure 1 est une représentation schématique d'un dispositif selon un premier mode de réalisation de l'invention,
- la figure 2 est une représentation schématique d'un dispositif selon un deuxième mode de réalisation de l'invention.
- la figure 3 est un diagramme d'un forage effectué conformément à l'invention,
- la figure 4 représente un tracé de courbes conforme à un procédé selon l'invention, et
- les figures 5a à 5h sont des courbes de pression en fonction du débit obtenues avec le dispositif selon le deuxième mode de réalisation, pour différents types d'écoulements.

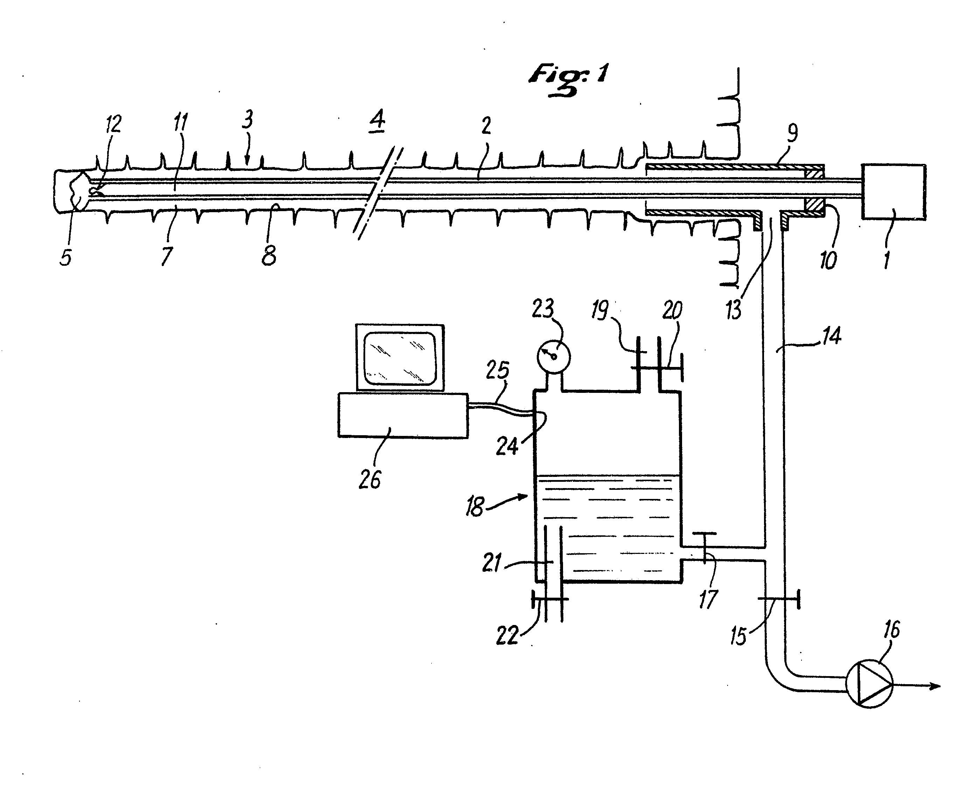

Le dispositif de la figure 1 comporte un appareil de forage schématisé en 1 susceptible d'entraîner un train de tiges 2 pour réaliser un forage 3 dans un terrain 4 dont on souhaite connaître la perméabilité aux différents points du forage.

La tige 2 porte à son extrémité un outil de forage 5 d'un diamètre supérieur à celui de la tige de manière à former un espace annulaire 7 entre la paroi 8 du forage et la tige 2. La pression hydrostatique, qui s'exerce lors de l'essai, en tête de forage, est reprise par un avant-tube d'ancrage 9 scellé au terrain 4 et concentrique au train de tiges 2.

Le train de tiges 2 traverse l'avant-tube 9 à sa partie postérieure par l'intermédiaire d'un joint 10 constitué par exemple par un presse-étoupe hydraulique.

Le train de tige 2 forme un conduit intérieur 11 pour le passage d'un fluide de forage, et un clapet anti-retour 12 à l'extrémité du train de tiges permet, lors des mesures, d'éviter un écoulement inverse.

Un trou 13 est percé dans l'avant-tube 9 pour permettre de relier l'espace annulaire 7 à un conduit d'évacuation 14 qui, pendant le forage, est relié, par l'intermédiaire d'une vanne ouverte 15, à une pompe 16. La pompe 16 permet de créer une dépression dans l'avant-tube 9 permettant de forer avec le presse-étoupe 10 dégonflé.

Le conduit 14 est par ailleurs relié par l'intermédiaire d'une vanne 17, à la partie inférieure d'un réservoir étanche 18. Le réservoir 18 comprend également à sa partie supérieure un évent 19 susceptible d'être fermé par une vanne 20 et, à sa partie inférieure, un conduit de vidange 21 fermé par une vanne 22. Le conduit 21 est réglable en hauteur de manière à régler le niveau de vidange.

Le réservoir 18 est équipé à sa partie supérieure d'un manomètre visuel 23 et d'un capteur de pression 24 dont le signal de sortie est appliqué par l'intermédiaire d'une ligne 25 à un calculateur 26.

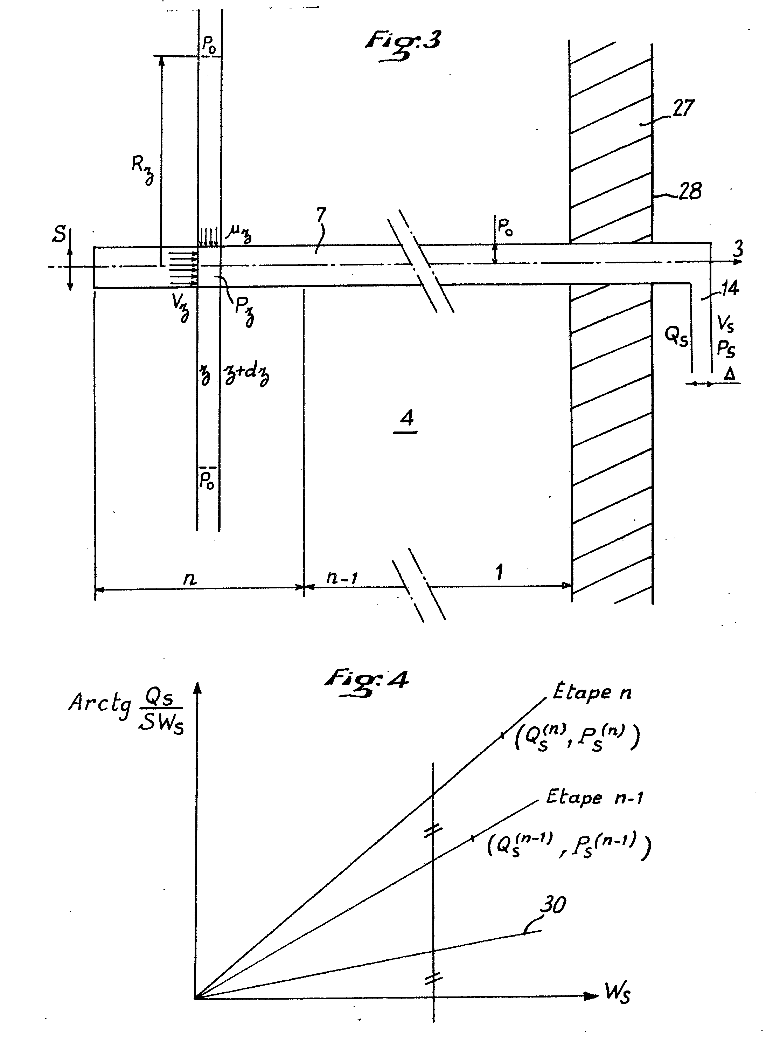

La figure 3 est similaire à la figure 1, mais par souci de simplification, on n'a pas représenté l'appareil de forage et le train de tiges. Par contre, on a montré une zone imperméable 27 qui peut correspondre soit à la zone.

TG/JD/AO

imperméable de l'avant-tube, soit à une zone de terrain imperméable naturellement ou imperméabilisée lors d'une phase antérieure.

Le dispositif qui vient d'être décrit est utilisé de la manière suivante.

Le forage s'effectue par passes ou tranches de terrain successives, une mesure étant effectué entre chaque passe.

Au début de chaque passe, la vanne 17 étant fermée, on ouvre les vannes 20 et 22 de manière à vidanger le réservoir 18. Le conduit 21 est réglé de manière qu'après la vidange le réservoir contienne une quantité d'air telle que, au cours de l'essai qui suivra, la pression varie de manière significative dans le temps souhaité pour la durée de l'essai.

A la fin de chaque passe, par exemple de la passe n à la figure 3, l'appareil de forage 1 est arrêté ainsi que la pompe 16, le presse-étoupe 10 est gonflé, la vanne 15 est fermée de même que les vannes 20 et 22, et la vanne 17 est ouverte.

Si la pression dans le réservoir 18 est inférieure à la pression $P_o$ de la nappe d'eau dans le terrain 4, l'eau commence alors à s'écouler dans le forage, et de la tête du forage vers le réservoir 18 dans lequel le niveau de liquide monte.

La figure 3 montre le drainage radial qui s'effectue dans le terrain 4 entre les plans de cotes z et z+dz. A ce niveau, l'eau qui filtre dans le terrain pénètre avec la vitesse $u_z$ dans le forage en un point où la pression est égale à $P_z$ et la vitesse d'écoulement axiale $V_z$.

Le calculateur 26 enregistre pour chaque passe, par l'intermédiaire du capteur de pression 24, l'évolution de la pression $P_S^{(n)}$ dans le réservoir 18 en fonction du temps, et en déduit de façon évidente la courbe représentant le débit $Q_S^{(n)}$ en fonction de $P_S^{(n)}$.

Le calculateur 26 est programmé de manière à établir le diagramme de la figure 4 représentant la variation de $Arctg\dfrac{Q_S}{SW_S}$ en fonction de $W_S$ avec les définitions données ci-dessus de $Q_S$ et $W_S$.

TG/JD/AO

On peut alors montrer que, sous réserve des hypothèses énoncées ci-dessus, et notamment de la non viscosité de l'eau, ces courbes sont des droites passant par l'origine des axes.

On peut également montrer que :

$$\omega^{(n)}{}_1{}^{(n)} = \frac{1}{W_S{}^{(n)}} \; \text{Arctg} \; \frac{Q_S{}^{(n)}}{SW_S{}^{(n)}} - \frac{1}{W_S{}^{(n-1)}} \; \text{Arctg} \; \frac{Q_S{}^{(n-1)}}{SW_S{}^{(n-1)}}$$

où 1 est la longueur de la passe n, où les exposant (n) indiquent que les quantités se rapportent à la passe n, et où les exposants (n-1) indiquent que les quantités se rapportent à la passe n-1.

On peut également montrer que pour la première passe :

$$\omega^{(1)}{}_1{}^{(1)} = \frac{1}{W_S{}^{(1)}} \cdot \; \text{Arctg} \; \frac{Q_S{}^{(1)}}{SQ_S{}^{(1)}}$$

On en déduit que la droite correspondante à la première passe a pour pente $\omega^{(1)}{}_1{}^{(1)}$ et que, pour l'étape n, la droite 30 obtenue par différence entre les ordonnées de la droite construite à l'étape n et les ordonnées de la droite construites à l'étape n-1 a pour pente $\omega^{(n)}{}_1{}^{(n)}$.

Le calculateur 26 déduit alors la perméabilité de la tranche correspondante à l'étape n de la formule suivante :

$$k^{(n)} = \frac{S \; \ln \, (R_z{}^{(n)} /r_o)}{\pi} \; g \; \omega^{(n)}$$

L'invention permet par conséquent de déterminer pas à pas la perméabilité du terrain traversé par le forage 7.

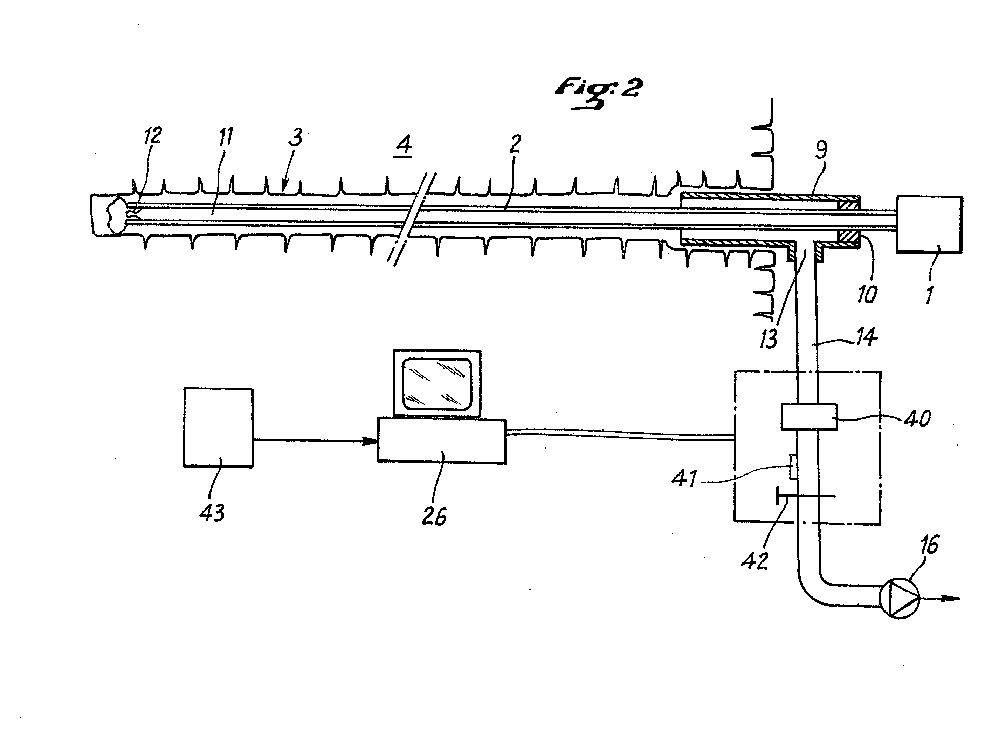

Si l'on se réfère maintenant à la figure 2 on voit que les mêmes éléments que ceux de la figure 1 ont reçu les mêmes références.

Dans ce cas toutefois le conduit 14 est relié à la pompe 16 par l'intermédiaire d'un débitmètre 40, d'un capteur de pression 41, et d'une vanne asservie 42. Les données captées par le débitmètre 40 et le capteur de pression 41 sont transmises au calculateur 26 qui à son tour commande la vanne 42.

TG/TD/AO

On a en outre représenté sur la figure 2 un ensemble 43 de mesure des paramètres de forage qui, pendant les phases de forage, transmettent au calculateur 26 les données telles que la vitesse de rotation du train du tige, la réaction exercée sur ce dernier et la vitesse d'avancement.

Le calculateur 26 peut être programmé pour déterminer automatiquement les tranches homogènes de terrain et par conséquent les emplacements où une nouvelle mesure de perméabilité doit être effectuée.

Le calculateur 26 peut par exemple commander la vanne 42 de manière à simuler l'essai réalisé avec le dispositif de la figure 1.

Il est également possible, grâce à la vanne asservie 42, d'effectuer des essais complets incluant des paliers de débit ou de pression. L'asservissement est alors destiné à faire varier dans un cas le débit pour obtenir une pression donnée, ou la pression pour obtenir un débit donné. Les paliers de débit ou de pression permettent donc d'obtenir des valeurs de $Q_S$ et $P_S$ stabilisées et d'éliminer ainsi les phénomènes transitoires de l'écoulement.

Quel que soit le programme utilisé, les valeurs de $Q_S$ et $P_S$ sont exploitées comme décrit précédemment en référence aux figures 3 et 4.

Il est également possible de programmer l'asservissement de manière à former un cycle, ce qui permet, outre la détermination de la perméabilité du terrain, l'analyse des phénomènes de colmatage et décolmatage du terrain ou de la nature laminaire ou turbulente de l'écoulement.

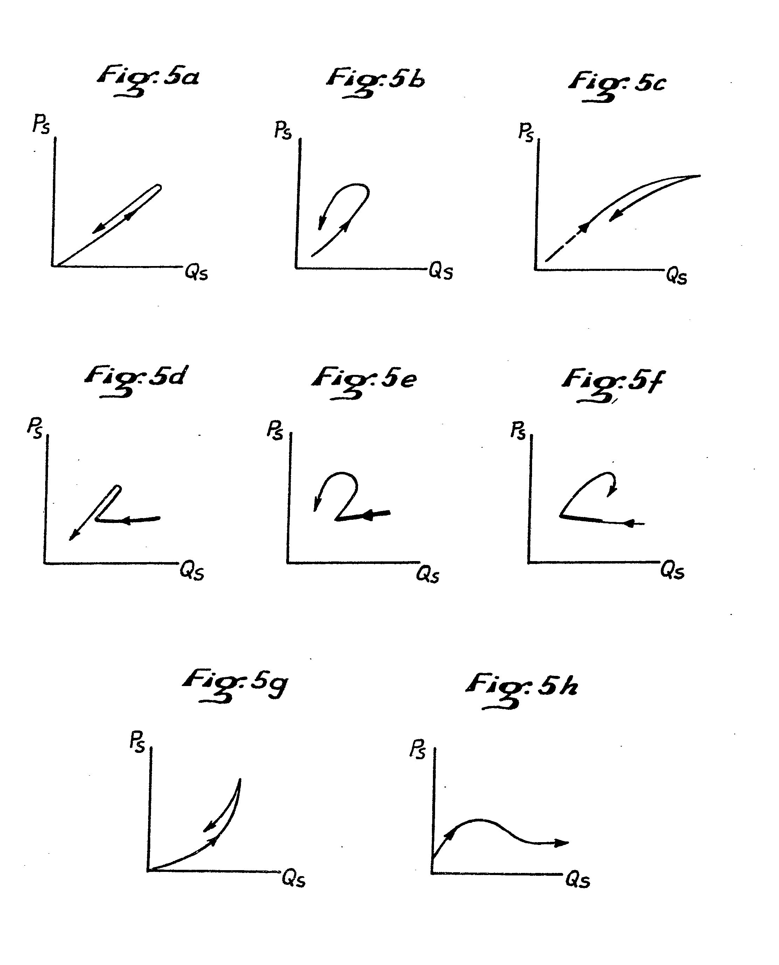

La figure 5a représente la courbe $P_S = f (Q_S)$ obtenue pour un écoulement laminaire sans colmatage.

Au contraire, les figures 5b et 5c montrent des courbes caractéristiques d'un écoulement laminaire avec respectivement colmatage à haute pression et décolmatage.

La courbe de la figure 5d est obtenue dans un terrain présentant des caractéristiques de colmatage à basse pression tandis que la figure 5e est obtenue avec un terrain présentant des caractéristiques de colmatage à basse pression et également à haute pression.

TG/JD/AO

La figure 5f représente un colmatage à basse pression et un décolmatage à haute pression.

La figure 5g est caractéristique d'un écoulement turbulent et enfin la figure 5h représente un décolmatage progressif.

Diverses variantes et modifications peuvent bien entendu être apportées à la description qui précède sans sortir pour autant du cadre ni de l'esprit de l'invention.

0250279

## REVENDICATIONS

1. Procédé pour la mesure de la perméabilité d'un terrain homogène, caractérisé par le fait que l'on effectue un forage dans ledit terrain, que l'on relie la tête du forage à un système d'acquisition de données et de contrôle du débit ou de la pression, que l'on provoque dans ledit forage un écoulement de liquide à partir dudit système, que l'on relève en tête du forage, à l'aide dudit système, la variation du débit ($Q_S$) en fonction de la pression ($P_S$), et que l'on déduit, de la courbe ainsi obtenue, la perméabilité du terrain.

2. Procédé pour la mesure de la perméabilité d'une tranche homogène d'un terrain, caractérisé par le fait que, dans une première étape, on effectue un forage dans ledit terrain jusqu'au début de ladite tranche homogène, et l'on provoque dans ledit forage un écoulement de liquide en relevant, en tête de forage, la variation du débit en fonction de la pression, que, dans une deuxième étape, on poursuit ledit forage jusqu'à la fin de ladite tranche homogène, et l'on provoque un nouvel écoulement de liquide dans le forage, en relevant de nouveau, en tête de forage, la variation du débit en fonction de la pression, et que l'on déduit, des deux courbes ainsi obtenues, la perméabilité de ladite tranche de terrain.

3. Procédé selon la revendication 2, caractérisé par le fait qu'après avoir effectué ledit forage jusqu'au début de la tranche homogène, et après avoir poursuivi ledit forage jusqu'à la fin de la tranche homogène, on relie la tête du forage à un système d'acquisition et de contrôle de la pression ou du débit et on provoque les écoulements de liquide à partir dudit système.

4. Procédé selon l'une quelconque des revendications 1 à 3, caractérisé par le fait que l'on déduit ledit débit en tête du forage de la variation, en fonction du temps, de la pression dans un réservoir pressurisé relié à la tête du forage.

5. Procédé selon l'une quelconque des revendications 1 à 4, caractérisé par le fait que l'on provoque l'écoulement du liquide du fond du forage vers la tête du forage, et que, pour relever la variation du débit en fonction de la pression, on trace une droite en portant les couples
$(Q_S, P_S)$ dans le plan $(W_S, \text{Arctg} \frac{Q_S}{SW_S})$ avec :

$$W_S = \sqrt{2\frac{P_o - P_S}{d_w} - V_S^2} \quad \text{et}$$

$$Q_S = s\, V_S$$

$P_o$ étant la pression de la nappe d'eau au niveau où est effectuée la
mesure, $d_w$ étant la densité de l'eau, s étant la section libre en tête du
forage, et S la section libre du forage.

6. Procédé selon l'une quelconque des revendications 1 à 4, caractérisé par
le fait que l'on provoque l'écoulement du liquide de la tête du forage vers
le fond du forage, et que pour relever la variation du débit en fonction
de la pression, on trace une droite en portant les couples
$(Q_S, P_S)$ dans le plan $(W_S, \text{Argth}\frac{|Q_S|}{SW_S})$ avec :

$$W_S = \sqrt{2\frac{P_S - P_o}{d_w} + V_S^2} \quad \text{et}$$

$$Q_S = s.V_S$$

$P_o$ étant la pression de la nappe d'eau au niveau où est effectuée la
mesure, $d_w$ étant la densité de l'eau, s étant la section libre en tête du
forage, et S la section libre du forage.

7. Procédé selon l'ensemble de la revendication 2 et de l'une des
revendications 5 et 6, caractérisé par le fait que l'on soustrait la droite
obtenue lors de la première étape de la droite obtenue lors de la deuxième
étape.

8. Procédé selon l'une quelconque des revendications 5 à 7, caractérisé par
le fait que l'on mesure la pente de la droite ainsi obtenue et que l'on
déduit la perméabilité de ladite pente.

9. Procédé selon la revendication 8, caractérisé par le fait que l'on déduit
la perméabilité de ladite pente par multiplication par une constante.

10. Procédé selon la revendication 9, caractérisé par le fait que ladite constante est :

$$\frac{S \ln(R/r_o)}{\pi} \frac{g}{l}$$

où R est le rayon d'action de l'écoulement dans le terrain, $r_o$ est le rayon du forage, g est l'attraction de la pesanteur, et l est l'épaisseur de la tranche de terrain dans laquelle on mesure la perméabilité.

11. Dispositif pour la mesure de la perméabilité d'un terrain, caractérisé par le fait qu'il comprend un appareil de forage comportant un train de tiges (2) supportant à son extrémité un outil de forage (5), pour réaliser un forage délimitant un espace annulaire (7) entre le train de tiges et la paroi du forage, un système de contrôle de débit ou de pression, un conduit (14) permettant de mettre en communication l'espace annulaire et ledit système, des moyens (24) pour mesurer au moins la pression ou le débit en tête du forage, et un calculateur électronique (26) agencé pour recevoir en entrée les signaux issus desdits moyens de mesure et pour en déduire la perméabilité du terrain.

12. Dispositif selon la revendication 11, caractérisé par le fait qu'il comprend un avant-tube d'ancrage (9) scellé au terrain et concentrique audit train de tige.

13. Dispositif selon la revendication 12, caractérisé par le fait qu'il comprend un presse-étoupe gonflable entre le train de tiges et l'avant-tube d'ancrage.

14. Dispositif selon l'une quelconque des revendications 11 à 13, caractérisé par le fait qu'il comprend un clapet anti-retour (12) à l'extrémité du train de tiges.

15. Dispositif selon l'une quelconque des revendications 11 à 14, caractérisé par le fait que ledit système de contrôle comprend un réservoir préssurisé (18).

16. Dispositif selon la revendication 15, caractérisé par le fait que ledit réservoir pressurisé comporte une vanne (20) de mise à l'air libre.

TG/JD/AO

17. Dispositif selon l'une quelconque des revendications 15 et 16, caractérisé par le fait que ledit réservoir pressurisé comprend une vanne de vidange (22).

18. Dispositif selon la revendication 17, caractérisé par le fait que ladite vanne de vidange est à niveau réglable.

19. Dispositif selon l'une quelconque des revendications 11 à 14, caractérisé par le fait que ledit système de contrôle comprend une vanne (42) asservie sur la pression ou le débit mesuré en tête du forage.

20. Dispositif selon l'une quelconque des revendications 11 à 19, caractérisé par le fait qu'il comprend un ensemble (43) de mesure des paramètres de forage.

TG/JD/AO

Fig: 1

0250279

Fig. 2

*Fig:3*

*Fig:4*

4/4

0250279

Fig. 5a

Fig. 5b

Fig. 5c

Fig. 5d

Fig. 5e

Fig. 5f

Fig. 5g

Fig. 5h